(19) Europäisches Patentamt / European Patent Office / Office européen des brevets

(11) **EP 4 437 349 B1**

(12) **FASCICULE DE BREVET EUROPÉEN**

(45) Date de publication et mention de la délivrance du brevet:
**12.11.2025 Bulletin 2025/46**

(21) Numéro de dépôt: **22829788.3**

(22) Date de dépôt: **22.11.2022**

(51) Classification Internationale des Brevets (IPC):
**G01P 3/62** *(2006.01)* **G01P 7/00** *(2006.01)*
**G01C 21/16** *(2006.01)* **G01C 5/06** *(2006.01)*

(52) Classification Coopérative des Brevets (CPC):
**G01P 7/00; G01C 5/06; G01C 21/165; G01P 3/62**

(86) Numéro de dépôt international:
**PCT/FR2022/052155**

(87) Numéro de publication internationale:
**WO 2023/094763 (01.06.2023 Gazette 2023/22)**

(54) **PROCÉDÉ DE LIMITATION DE CORRECTION DE VITESSE BARO-INERTIELLE ET SYSTÈME ASSOCIÉ**

**VERFAHREN ZUR BEGRENZUNG DER BARO-INERTIALEN GESCHWINDIGKEITSKORREKTUR UND ZUGEHÖRIGES SYSTEM**

**METHOD FOR LIMITING BARO-INERTIAL SPEED CORRECTION AND ASSOCIATED SYSTEM**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **26.11.2021 FR 2112605**

(43) Date de publication de la demande:
**02.10.2024 Bulletin 2024/40**

(73) Titulaire: **Safran Electronics & Defense**
**75015 Paris (FR)**

(72) Inventeurs:
• **BECHERET, Yves**
**77550 MOISSY-CRAMAYEL (FR)**
• **DAVAIN, Loïc**
**77550 MOISSY-CRAMAYEL (FR)**

(74) Mandataire: **Cabinet Camus Lebkiri**
**25 rue de Maubeuge**
**75009 Paris (FR)**

(56) Documents cités:
**US-A- 4 882 697          US-A1- 2003 233 175**
**US-A1- 2015 006 020**

• **AUSMAN ET AL: "BARO-INERTIAL LOOP FOR THE USAF STANDARD RLG INU", NAVIGATION: JOURNAL OF THE INSTITUTE OF NAVIGATION, INSTITUTE OF NAVIGATION, FAIRFAX, VA, US, vol. 38, no. 2, 1 September 1991 (1991-09-01), pages 205 - 220, XP056013096, ISSN: 0028-1522**

## Description

## DOMAINE TECHNIQUE DE L'INVENTION

Le domaine technique de l'invention est celui de la métrologie pour l'aide au positionnement vertical de systèmes aéroportés.

La présente invention concerne un procédé de limitation de correction de vitesse baro-inertielle et en particulier une correction de vitesse baro-inertielle au sein d'une boucle baro-inertielle par modification d'une valeur de gain de correction de position verticale.

## ARRIERE-PLAN TECHNOLOGIQUE DE L'INVENTION

Les systèmes aéroportés ont un besoin de données de positionnement vertical fiables. Par « positionnement vertical » on entend tout type d'information verticale, par exemple l'altitude, la vitesse verticale ou encore l'accélération verticale.

Pour combler ce besoin de données de positionnement fiables, ces systèmes embarquent une pluralité de capteurs permettant, ensemble ou pris seuls, de positionner le système aéroporté. Chaque capteur de cette pluralité de capteurs est utilisé pour obtenir, corriger et/ou confirmer l'information de positionnement.

De manière connue, la pluralité de capteurs est intégrée dans une centrale inertielle ou dans une AHRS (de l'anglais « Attitude and Heading Reference System » pour « Système de référence d'attitude et de cap »). Une centrale inertielle comprend au moins des capteurs d'accélération et de rotation pour déterminer le mouvement par rapport à la Terre du système dans lequel elle est embarquée, après une phase d'initialisation. Une AHRS exploite également des mesures du champ magnétique et de vitesse air avec des moyens de calcul, afin d'élaborer les informations de son attitude par rapport à la Terre et d'entretenir sa localisation.

Dans une centrale inertielle comme dans une AHRS, comme l'altitude et la vitesse verticale sont obtenues par intégration en continu de la composante verticale de l'accélération déduite des accéléromètres et de l'attitude mesurée par l'accéléromètre, la moindre erreur d'accélération est accumulée et amplifiée par l'intégration pour obtenir la vitesse verticale et par la double intégration pour obtenir l'altitude Pour pallier cela, les systèmes aéroportés embarquent des capteurs supplémentaires pour corriger ces erreurs. Par exemple, les aéronefs embarquent typiquement un baro-altimètre pour obtenir une différence de pression entre une altitude de référence et l'altitude du baro-altimètre. L'information obtenue du baro-altimètre est utilisée par un processeur pour corriger en permanence l'erreur verticale de l'accéléromètre. Ce processeur met en œuvre une boucle numérique appelée boucle baro-inertielle.

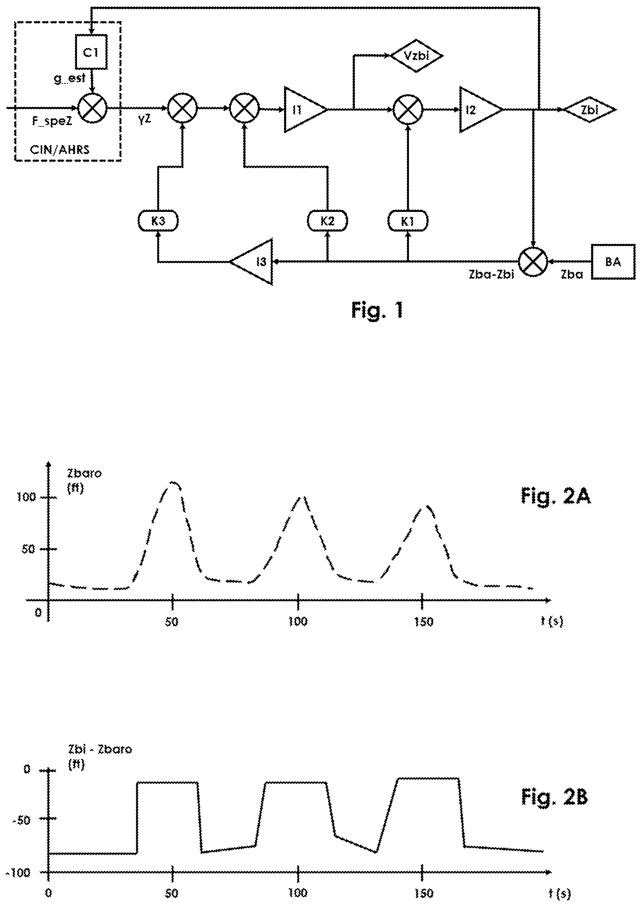

Une telle boucle baro-inertielle connue est représentée schématiquement à la Figure 1. Les additionneurs/soustracteurs sont représentés par des cercles comprenant une croix. Les intégrateurs sont représentés par des triangles. Une force spécifique verticale F_specZ est calculée par une centrale inertielle de navigation CIN ou une AHRS, à partir de données fournies par un accéléromètre A. Cela est représenté schématiquement par la flèche entre l'accéléromètre A et l'additionneur de la CIN/AHRS. La CIN ou l'AHRS fournit ainsi à la boucle baro-inertielle une accélération verticale estimée $\gamma Z$, basée sur la force spécifique verticale F_speZ et sur la pesanteur locale estimée g_est par la fonction de calcul C1, fonction décroissante de l'altitude de gradient environ -2g/R (avec R le rayon Terrestre moyen, g environ 9,81 m/s^2 légèrement variable avec la position sur Terre à H=0). Cela permet d'obtenir l'accélération verticale $\gamma Z$ aux effets des erreurs de pesanteur compensée, d'accéléromètres et d'attitude près.

Cette information d'accélération verticale $\gamma Z$ est intégrée une première fois par l'intégrateur I1 pour obtenir une vitesse verticale Vzbi puis une seconde fois par l'intégrateur I2 pour obtenir une position verticale (altitude) Zbi. Pour améliorer la précision des valeurs obtenues, la fonction de calcul C1 réalise un calcul de pesanteur et de l'accélération de Coriolis à partir de l'altitude Zbi, qui est additionnée à la force spécifique verticale F_speZ provenant de l'accéléromètre. Cette boucle (supérieure sur la représentation schématique de la Figure 1) sera appelée « boucle inertielle ». Comme indiqué précédemment, cette boucle inertielle se basant uniquement sur des mesures d'accéléromètre, les erreurs de mesure se cumulent et les valeurs obtenues sont instables.

Les boucle baro-inertielles connues comprennent alors un asservissement de l'altitude intégrée à partir de mesures inertielles sur une altitude mesurée par un baro-altimètre avec un correcteur d'ordre 3. La boucle baro-inertielle de la Figure 1 comprend donc en entrée une mesure supplémentaire de différence de pression provenant d'un baro-altimètre. Cette « altitude pression » est fournie en entrée au bloc « BA ». Elle est comparée à l'altitude Zbi provenant de la boucle inertielle et cette différence est renvoyée à différents points de la boucle inertielle.

Dans la boucle inférieure (à la Figure 1), qui sera appelée boucle de correction, trois corrections sont estimées :

- Une correction de l'altitude à la boucle K1, via le gain K1, qui permet de corriger assez rapidement l'altitude Zbi obtenue par double intégration de l'accélération verticale à partir de l'altitude pression,

- Une correction de la vitesse verticale à la boucle K2, via le gain K2,

- Une correction de l'accélération verticale à la boucle K3, via le gain K3 et l'intégrateur I3. Une correction de vitesse permanente implique en effet une erreur d'accélération. La boucle K3 corrige l'accélération, ce qui permet d'éviter de corriger la vitesse en permanence, de ne pas avoir un biais de vitesse en permanence à cause d'une erreur d'accélération. Cette correction de l'accélération permet de compenser les erreurs dues :

- A l'accéléromètre mesurant l'accélération inertielle, cette erreur étant principalement due au(x) biais de l'accéléromètre,

- Aux caractéristiques de la couche d'atmosphère réellement rencontrée pendant le vol,

- Et à l'écart entre la valeur de pesanteur apparente calculée par la fonction de calcul C1 et utilisée dans la boucle baro-inertielle et la pesanteur apparente locale réelle.

La boucle de correction est un correcteur d'ordre 3 comprenant trois gains K1 à K3. Ces gains sont prédéterminés en fonction de la chaîne anémométrique du système aéroporté qui embarque la boucle baro-inertielle. Ces gains peuvent être fonction par exemple d'erreurs maximales, de dépassement d'erreur et de vitesses de convergence souhaités. Des contraintes particulières s'appliquent par exemple pour des systèmes aéroportés qui manœuvrent très fortement en axe vertical, impliquant des gains K1 à K3 différents de gains K1 à K3 utilisés pour des avions commerciaux civils. De manière générale, quel que soit l'aéronef, il existe une relation entre ces différents coefficients, comme décrit dans le paragraphe suivant.

On définit une constante $\tau$ qui correspond au temps de réponse de la boucle baro-inertielle. A partir de ce temps de réponse, les coefficients K1, K2, K3 peuvent être déduits comme suit, le choix du coefficient $\tau$ dépendant de l'aéronef et d'autres besoins opérationnels :

-

$$K1 = \frac{3}{\tau}$$

-

$$K2 = \frac{3}{\tau^2}$$

-

$$K3 = \frac{1}{\tau^3}$$

Ces gains sont multipliés à la différence entre l'altitude barométrique BA et la position verticale baro-inertielle Zbi ou à cette différence intégrée par l'intégrateur I3. Ces corrections résultant de la multiplication de chaque gain avec la différence entre l'altitude barométrique BA et la position verticale baro-inertielle Zbi ou avec cette différence intégrée par l'intégrateur I3 sont ajoutées à différents endroits de la boucle inertielle « supérieure ». Par exemple, la correction issue de la multiplication du gain K1 avec la différence entre l'altitude barométrique BA et la position verticale baro-inertielle Zbi est ajoutée à la vitesse baro-inertielle Vzbi, avant l'intégrateur I2. La correction issue de la multiplication du gain K2 avec la différence entre l'altitude barométrique BA et la position verticale baro-inertielle Zbi est ajoutée à l'accélération Acc, avant l'intégrateur I1 et la correction issue de la multiplication du gain K3 avec la différence entre l'altitude barométrique BA et la position verticale baro-inertielle Zbi intégrée par I3 est aussi ajoutée à l'accélération Acc, avant l'intégrateur I1. D'autres documents de l'état de la technique traitant de tels procédés et systèmes sont les suivants: US 4 882 697 A, US 2003/233175 A1 ou US 2015/006020 A1.

Un problème survient lorsqu'un système aéroporté embarquant une boucle baro-inertielle, un baro-altimètre BA et un accéléromètre A, s'approche du sol. Un effet de souffle, principalement présent lorsque le système aéroporté est un hélicoptère, augmente localement la pression à mesure que le système aéroporté s'approche du sol. Le baro-altimètre BA voit alors une augmentation de pression très rapide. En conséquence, l'altitude barométrique Zba est modifiée comme représenté à la Figure 2A. La Figure 2B montre la différence entre la position verticale baro-inertielle Zbi et l'altitude barométrique Zba. Comme l'altitude barométrique Zba est utilisée pour corriger la vitesse baro-inertielle Vzbi élaborée par la boucle baro-inertielle, la vitesse baro-inertielle Vzbi présente des erreurs transitoires pouvant atteindre 1000 pieds par minute lors de ces phases de variations d'erreur. Lorsqu'un hélicoptère par exemple se pose sur du sable ou de la neige, cela peut poser problème car l'atterrissage devient complexe car celui-ci est principalement basé sur la vitesse verticale Vzbi élaborée par la boucle baro-inertielle. Ce problème se pose aussi en passage de falaises, un changement rapide de pression intervenant, alors que l'altitude absolue n'a pas été modifiée.

Par ailleurs, la vitesse verticale Vzbi élaborée par la boucle baro-inertielle est affectée par les fortes erreurs initiales d'altitude baro-inertielle, par exemple en cas d'initialisation simple par exemple d'altitude initiale initialisée à 0. Le temps pour passer sous une erreur de 300 pieds par minute dépend de l'erreur d'initialisation de l'altitude baro inertielle Zbi et ce temps peut être considéré trop élevé par rapport à un besoin de validité rapide de la vitesse baro-inertielle Vzbi après mise sous tension.

Il existe donc un besoin de pouvoir corriger une variation importante de vitesse baro-inertielle due à une augmentation importante d'altitude barométrique.

**RESUME DE L'INVENTION**

L'invention offre une solution aux problèmes évoqués précédemment, en permettant, en modifiant la correction de position verticale, de limiter les changements de vitesse baro-inertielle au sein d'une boucle baro-inertielle dus à des erreurs transitoires d'altitude barométrique.

Un aspect de l'invention concerne donc un procédé de limitation de correction de vitesse verticale baro-inertielle, la vitesse verticale baro-inertielle étant calculée par une boucle baro-inertielle, la boucle baro-inertielle étant implémentée par au moins un processeur compris dans un système aéroporté, le système aéroporté comprenant en outre au moins un accéléromètre et au moins un baro-altimètre, la boucle baro-inertielle prenant en entrée au moins une accélération verticale provenant d'au moins une mesure de l'accéléromètre et au moins une altitude barométrique provenant d'au moins une mesure du baro-altimètre, la boucle baro-inertielle étant configurée pour :

- fournir, à partir de l'accélération verticale, au moins une position verticale baro-inertielle et la vitesse verticale baro-inertielle

- corriger, à partir de l'altitude barométrique et d'au moins un gain de correction de position, d'au moins un gain de correction de vitesse verticale et d'au moins un gain de correction d'accélération verticale, la position verticale baro-inertielle et la vitesse verticale baro-inertielle,

   la position verticale baro-inertielle subissant une modification due à une modification de l'altitude barométrique, la modification de l'altitude barométrique étant due à une modification de pression locale,

   le procédé étant mis en œuvre par le processeur implémentant la boucle baro-inertielle et étant caractérisé en ce qu'il comprend au moins une étape de limitation de correction de la vitesse verticale baro-inertielle lorsque la valeur absolue de la différence entre l'altitude barométrique et la position verticale baro-inertielle est supérieure à un seuil prédéterminé, l'étape de limitation de correction de la vitesse verticale baro-inertielle comprenant la modification du gain de correction de position.

Grâce à l'invention, il est possible de limiter les corrections de vitesse baro-inertielle en corrigeant rapidement et de manière simple à implémenter les erreurs transitoires d'altitude baro-inertielle calculée par la boucle baro-inertielle. Ces erreurs surviennent par exemple dans les cas où le porteur est à altitude constante, mais que le baro-altimètre mesure à tort une variation d'altitude. La correction rapide selon l'invention permet de limiter l'impact de cette erreur transitoire d'altitude sur la vitesse baro-inertielle calculée. Cette correction est mise en œuvre au niveau du gain de correction de la position baro-inertielle. En agissant sur le gain de correction de la position baro-inertielle en fonction de la différence entre l'altitude barométrique Zba issue du baro-altimètre et la position verticale baro-inertielle Zbi issue de la boucle baro-inertielle, l'erreur transitoire d'altitude baro-inertielle n'a pas le temps d'avoir un impact sur la correction de vitesse verticale baro-inertielle Vzbi. Ainsi, à vitesse verticale vraie constante, la vitesse verticale estimée baro-inertielle Vzbi est maintenue constante ou est peu modifiée car l'erreur d'altitude est rapidement corrigée, la correction de vitesse verticale baro-inertielle est donc limitée.

L'invention permet par exemple d'augmenter le gain de correction de la position baro-inertielle lorsque la différence entre l'altitude barométrique et la position verticale baro-inertielle est supérieure à un seuil, résultant en une correction de la position baro-inertielle plus importante que celle qui aurait été réalisée classiquement par la boucle baro-inertielle. Si cette différence est supérieure à un seuil, la pression locale, c'est-à-dire au niveau du système embarquant les équipements de l'invention, a été modifiée de manière importante rapidement. Une correction plus importante de la position baro-inertielle permet ainsi de limiter la correction de vitesse baro-inertielle qui aurait dû être appliquée à cause de cette modification importante et rapide de la pression locale, le but de l'invention étant de corriger rapidement la position verticale sans modifier la vitesse verticale.

L'invention permet notamment de limiter la correction de vitesse verticale baro-inertielle Vzbi sur les hélicoptères dans les cas de passage rapide en effet de sol, ou encore dans les cas de passage de falaise, permettant ainsi de maintenir une vitesse verticale au plus proche de la vitesse verticale vraie.

Elle permet également d'améliorer la robustesse du démarrage de la boucle baro-inertielle en réduisant la durée nécessaire pour respecter la précision de vitesse verticale baro-inertielle Vzbi avec une initialisation incorrecte mais simple, par exemple 0 m, de l'altitude initiale dans la boucle baro inertielle. Le transitoire si le démarrage est réalisé à 4000 m avec la boucle standard est alors très élevé et l'invention permet de corriger ce problème.

On entend par « limitation de correction » une réduction de la correction de la vitesse baro-inertielle par le gain K2 qui aurait dû avoir lieu si la correction de la position baro-inertielle n'avait pas été modifiée. On entend par « correction » la réduction des erreurs transitoires de vitesse verticale baro-inertielle Vzbi issue de la boucle baro-inertielle, une erreur étant une modification de la vitesse verticale baro-inertielle Vzbi tandis que la vitesse verticale vraie n'est pas modifiée, ou une modification importante de la vitesse verticale baro-inertielle Vzbi tandis que la vitesse verticale vraie est peu modifiée.

Outre les caractéristiques qui viennent d'être évoquées dans le paragraphe précédent, le procédé de limitation de correction selon un aspect de l'invention peut présenter une ou plusieurs caractéristiques complémentaires parmi les suivantes, considérées individuellement ou selon toutes les combinaisons techniquement possibles :

- la modification du gain de correction de position comprend la multiplication du gain de correction de position par un facteur prédéterminé supérieur à 1,

- le seuil prédéterminé est compris entre 3 et 9 mètres, préférentiellement 7 mètres, et le facteur prédéterminé est compris entre 2 et 4, préférentiellement 3,

- le seuil prédéterminé est fonction de l'altitude baro-inertielle,

- la modification de gain de correction de position n'est réalisée que si l'altitude baro-inertielle est inférieure ou égale à un seuil d'altitude prédéterminé,

- l'étape de limitation de correction de la vitesse verticale baro-inertielle comprend en outre la modification du gain de correction de vitesse et la modification du gain de correction d'accélération,

- la modification du gain de correction de vitesse comprend la multiplication du gain de correction de vitesse par un premier facteur prédéterminé inférieur à 1 et la modification du gain de correction d'accélération comprend la multiplication du gain de correction d'accélération par un deuxième facteur prédéterminé inférieur à 1.

Un autre aspect de l'invention concerne un système aéroporté comprenant au moins :

- un baro-altimètre,

- un accéléromètre et

- un processeur implémentant une boucle baro-inertielle, la boucle baro-inertielle prenant en entrée au moins une accélération verticale provenant d'au moins une mesure de l'accéléromètre et au moins une altitude barométrique provenant d'au moins une mesure du baro-altimètre, la boucle baro-inertielle étant configurée pour :

  - fournir, à partir de l'accélération verticale, au moins une position verticale et au moins une vitesse verticale

  - corriger, à partir et de l'altitude barométrique et d'au moins un gain de correction de position, d'au moins un gain de correction de vitesse verticale et d'au moins un gain de correction d'accélération verticale, la position verticale et la vitesse verticale,

la vitesse verticale baro-inertielle subissant une modification due à une modification de l'altitude barométrique, la modification de l'altitude barométrique étant due à une modification de pression locale,

le système étant caractérisé en ce que le processeur est configuré pour mettre en œuvre le procédé de limitation de correction de vitesse verticale baro-inertielle selon l'invention.

Un autre aspect de l'invention concerne un produit programme d'ordinateur comprenant des instructions qui, lorsque le programme est exécuté par un ordinateur, conduisent celui-ci à mettre en œuvre le procédé selon l'invention.

Un autre aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

L'invention trouve une application particulièrement intéressante dans les aéronefs lors de passage à proximité du sol, lors de passages de falaise ou encore à l'initialisation de la boucle baro-inertielle.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre une représentation schématique d'une boucle baro-inertielle connue,

- Les figures 2A et 2B montrent des erreurs transitoires d'altitude en effet de sol,

- La Figure 3 montre une représentation schématique d'un système mettant en œuvre le procédé selon l'invention,

- La Figure 4 montre une représentation schématique du procédé selon l'invention.

- La Figure 5 montre une représentation schématique d'une boucle baro-inertielle modifiée selon un premier mode de réalisation de l'invention,

- La Figure 6 montre une représentation schématique d'une boucle baro-inertielle modifiée selon un deuxième mode de réalisation de l'invention.

**DESCRIPTION DETAILLEE**

Sauf précision contraire, un même élément apparaissant sur des figures différentes présente une référence unique.

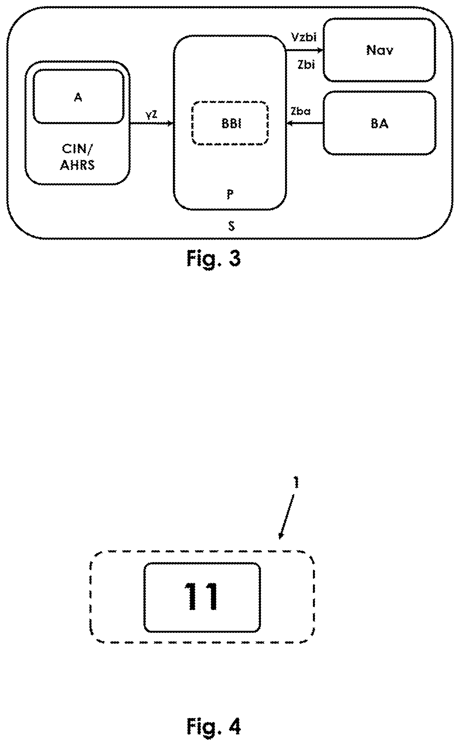

La Figure 3 montre une représentation schématique d'un système mettant en œuvre le procédé de limitation de correction de vitesse baro-inertielle selon l'invention.

Un système pour mettre en œuvre l'invention comprend au moins un baro-altimètre BA, un processeur P et une centrale de navigation CIN ou une AHRS, comprenant au moins un accéléromètre A. Le système S de la Figure 3 comprend aussi un système de navigation Nav.

A partir de données de l'accéléromètre A et de l'attitude par rapport à l'horizontale (synchrones) entretenue par la CIN (centrale inertielle de navigation) ou l'AHRS, une force spécifique verticale F_speZ est calculée. Le baro-altimètre BA est configuré pour fournir au moins une donnée d'altitude barométrique Zba au processeur P. Le processeur P implémente une boucle baro-inertielle BBI et est configuré pour mettre en œuvre le procédé de limitation de correction de vitesse verticale baro-inertielle selon l'invention. De manière optionnelle, lorsque le système S comprend le système de navigation Nav, le processeur P est en outre configuré pour transmettre au système de navigation Nav au moins une donnée de vitesse verticale baro-inertielle Vzbi issue de la boucle baro-inertielle BBI et/ou au moins une donnée de position verticale baro-inertielle Zbi issue de la boucle baro-inertielle BBI.

Le système S est un système aéroporté, c'est-à-dire qu'il est transporté par voie aérienne, en étant embarqué dans un dispositif ou un système ayant la capacité de naviguer par les airs, tel qu'un aéronef, par exemple un avion ou un hélicoptère. L'invention couvre les cas où les différents composants du système S ne sont pas embarqués dans le même dispositif et/ou système naviguant par les airs. Il est nécessaire qu'au moins l'accéléromètre A et le baro-altimètre BA soient compris dans le même dispositif et/ou système naviguant par les airs.

Le processeur P est configuré pour mettre en œuvre le procédé de limitation de correction de vitesse baro-inertielle selon l'invention. La Figure 4 montre une représentation schématique du procédé 1 de limitation de correction de vitesse baro-inertielle selon l'invention.

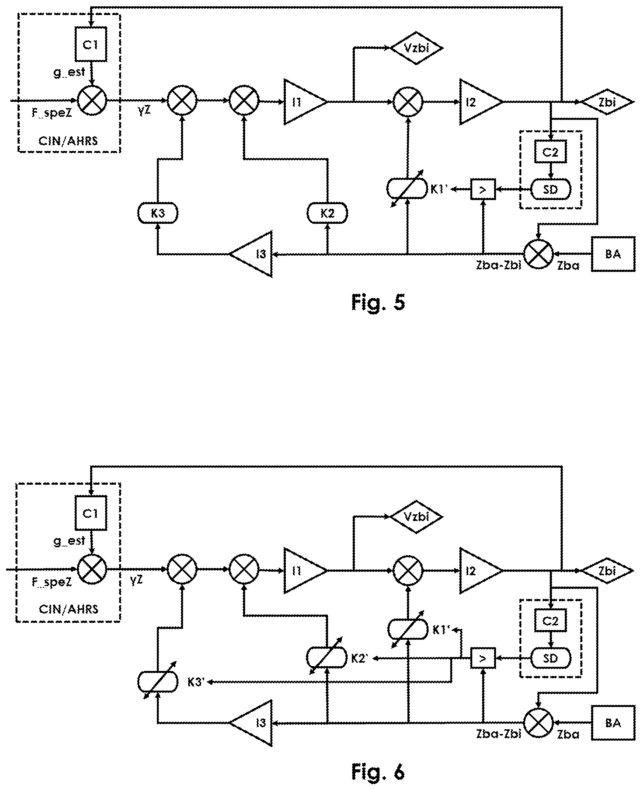

La vitesse baro-inertielle corrigée est la vitesse verticale Vzbi en sortie de la boucle baro-inertielle BBI, comme représenté à la Figure 5, qui montre une représentation schématique d'une boucle baro-inertielle BBI pour mettre en œuvre le procédé selon l'invention. La boucle baro-inertielle BBI est une boucle numérique, implémentée par le processeur P. Pour implémenter la boucle baro-inertielle BBI, le système S comprend en outre une mémoire (non représentée) stockant des instructions qui, lorsqu'elles sont exécutées par le processeur P, conduisent le processeur P à mettre en œuvre la boucle baro-inertielle BBI.

La boucle baro-inertielle BBI de la Figure 5 est sensiblement une boucle baro-inertielle classique, modifiée par rapport à une boucle baro-inertielle classique en ce que le gain K1 est remplacé par un gain variable K1'. Le gain K1 est un gain de correction de la position verticale baro-inertielle Zbi. Le gain variable K1' est donc aussi un gain de correction de la position verticale baro-inertielle Zbi. Celui-ci est utilisé avant l'intégration, avec l'intégrateur I2, de la vitesse Zbi dans la boucle inertielle « supérieure ». Il intervient donc rapidement sur la position verticale baro-inertielle Zbi issue de la boucle baro-inertielle BBI, car il est ajouté vers la fin de la boucle inertielle « supérieure » de la boucle baro-inertielle BBI. Cette correction intervient aussi sur la vitesse baro-inertielle Vzbi puisque la position verticale baro-inertielle Zbi est ré-utilisée par la boucle correctrice « inférieure » avec les gains K2 et K3. Les gains K1 à K3 peuvent par exemple prendre des valeurs d'ordres de grandeur K1=0.16, K2=0.007 et K3=0.000120, pour une constante de temps de la boucle en altitude de 6 secondes. En augmentant le gain de correction de position K1, par exemple à 0.32 avec un facteur 2 pour les valeurs décrites précédemment, on accélère la correction de la position verticale baro-inertielle Zbi, en limitant la correction de vitesse et d'accélération, car on ne laisse pas le temps à la boucle de corriger la vitesse. Ainsi, la position verticale baro-inertielle Zbi est modifiée, ce qui permet de limiter la correction de vitesse appliquée au niveau des boucles de K2 et K3.

Le procédé 1 de limitation de correction de vitesse baro-inertielle selon l'invention comprend ainsi au moins une étape 11 de limitation de la correction de la vitesse verticale baro-inertielle Vzbi lorsque la valeur absolue de la différence entre l'altitude barométrique Zbaro et la position verticale baro-inertielle Zbi est supérieure à un seuil prédéterminé SP.

Cette étape 11 comprend la modification du gain de correction de position K1 lorsque la différence entre Zba et Zbi est supérieure au seuil prédéterminé SP. En effet, si la valeur de pression locale a été modifiée rapidement et de manière assez importante, la valeur absolue de la différence entre Zba et Zbi est supérieure au seuil prédéterminé SP. Ainsi, cet indicateur permet de savoir quand se présente la nécessité de limiter la correction en vitesse. Il est donc nécessaire de choisir un seuil SP de manière à s'assurer que la différence entre Zba et Zbi est bien liée à cette modification de pression locale. Pour cela, le seuil SP est choisi supérieur à entre 95% et 99% des écarts en vol normal et en montée descente hors effet de sol rapide sur le système naviguant par les airs embarquant le système aéroporté S. Ainsi, un seuil prédéterminé SP peut être fixe, compris par exemple entre 10 et 30 pieds, c'est-à-dire compris entre environ 3 et 9 mètres. De manière préférentielle, un seuil prédéterminé SP fixe d'environ 7 mètres est choisi, correspondant à une valeur supérieure à 23 pieds (7.0104 mètres).

Dans une variante de l'invention représentée à la Figure 5, le seuil peut être déterminé de manière dynamique en fonction de la position verticale baro-inertielle Zbi. En effet, l'écart-type de bruit de mesure de pression quasi constant ramené en mètres varie selon une loi typique correspondant à l'inverse de la variation relative de densité de l'atmosphère fonction de l'altitude. Avec la loi standard de l'atmosphère, un coefficient d'adaptation du seuil par rapport à un réglage à 0m soit 1013HPa, peut être approximé par une fonction polynomiale d'ordre 2 croissante en fonction de la position verticale baro-inertielle Zbi, avec une valeur 1 à Zbi=0. Cela est réalisé par la fonction de calcul C2, pour obtenir le seuil dynamique SD. Dans la suite de la description, le seuil prédéterminé et le seuil dynamique SD seront confondus.

Lorsque la valeur absolue de la différence |Zba-Zbi| entre l'altitude barométrique Zba et la position verticale baro-inertielle Zbi issue de la boucle baro-inertielle BBI est supérieure au seuil, l'étape 11 de limitation de correction est mise en œuvre et comprend la modification du gain de correction position K1 vers un gain modifié K1'. Cette modification comprend préférentiellement la multiplication du gain K1 par un facteur prédéterminé. Ce facteur est par exemple choisi entre 2 et 4, préférentiellement 3. Ainsi, est ajoutée à la correction K1 * (Zba- ZBI) une correction supplémentaire de par exemple (Fac-1) * K1 * (Zba- ZBI), avec Fac le facteur choisi, lorsque la valeur absolue de (Zba- ZBI) dépasse le seuil. On peut aussi considérer que le gain K1 est multiplié par le facteur Fac. La correction Fac * K1 * (Zba- Zbi) est ajoutée à la vitesse Vzbi avant intégration par l'intégrateur I2, comme montré dans la boucle baro-inertielle de la Figure 5. Dans une variante, les modifications de gain en cas de dépassement du seuil prédéterminé ou dynamique SD ne sont appliquées que si l'altitude baro-inertielle Zbi est inférieure ou égale à un seuil d'altitude prédéterminé, par exemple un seuil d'altitude choisi entre 5000 et 8000m, car il n'y a pas d'effet de sol possible au-dessus de cette limite (selon l'emploi et les capacités des appareils).

Augmenter le gain K1 réduit la constante de temps associée mais augmente la sensibilité de la position verticale baro-inertielle Zbi aux bruits de mesures. Une augmentation permanente de ce gain K1 affecterait donc le bruit de la position verticale baro-inertielle Zbi. Ainsi, dans l'invention, le gain K1 n'est modifié que lorsqu'un seuil est dépassé. Il convient de noter que le gain maximum utilisable pour le gain de correction K1 est limité par le besoin de stabilité de la boucle baro-inertielle BBI avec les retards et cadences de calculs du bouclage, typiquement 100Hz dans les systèmes S utilisant des centrales inertielles de navigation.

L'invention permet de limiter les erreurs transitoires de vitesse verticale baro-inertielle Vzbi, entièrement ou partiellement, en fonction du facteur de multiplication du gain K1 choisis. Le seuil permet de choisir la sensibilité de déclenchement de la correction et donc de la modification du gain K1.

Dans un autre mode de réalisation de l'invention, les coefficients de correction de la vitesse K2 et de correction de l'accélération K3 sont aussi modifiés à l'étape 11 de limitation de la correction de vitesse. Cela est représenté à la Figure 6, qui montre une modification des gains K2 et K3 en plus de la modification du gain K1. Les gains K2 et K3 ne sont pas modifiés de la même façon que le gain K1 en ce qu'ils sont multipliés par un facteur inférieur à 1. Ainsi, les gains K2 et K3 sont réduits lorsque la différence entre Zba et Zbi est supérieure au seuil prédéterminé ou dynamique SD. Le facteur utilisé pour réduire les gains K2 et K3 peut être le même pour K2 et pour K3 ou peut être différent pour chacun des deux gains. Les gains de correction de la vitesse K2 et de l'accélération K3 peuvent par exemple être divisés par 2, 3 ou 4. Ce deuxième mode de réalisation permet de limiter encore la correction de vitesse baro-inertielle et donc de réduire l'erreur de vitesse baro-inertielle liée à une modification erronée de l'altitude barométrique. Dans une variante à ce deuxième mode de réalisation, les gains de correction de vitesse K2 et/ou d'accélération K3 sont annulés, c'est-à-dire qu'une valeur nulle leur est attribuée, ce qui permet de supprimer la correction en vitesse lorsque la différence entre Zba et Zbi est supérieure au seuil prédéterminé ou dynamique SD.

**Revendications**

1. Procédé de limitation de correction de vitesse verticale baro-inertielle, la vitesse verticale baro-inertielle étant calculée par une boucle baro-inertielle, la boucle baro-inertielle étant implémentée par au moins un processeur compris dans un système aéroporté, le système aéroporté comprenant en outre au moins un accéléromètre et au moins un baro-altimètre, la boucle baro-inertielle prenant en entrée au moins une accélération verticale provenant d'au moins une mesure de l'accéléromètre et au moins une altitude barométrique provenant d'au moins une mesure du baro-altimètre, la boucle baro-inertielle étant configurée pour :

   - fournir, à partir de l'accélération verticale, au moins une position verticale baro-inertielle et la vitesse verticale baro-inertielle
   - corriger, à partir et de l'altitude barométrique et d'au moins un gain de correction de position, d'au moins un gain de correction de vitesse verticale et d'au moins un gain de correction d'accélération verticale, la position verticale baro-inertielle et la vitesse verticale baro-inertielle, la position verticale baro-inertielle subissant une modification due à une modification de l'altitude barométrique, la modification de l'altitude barométrique étant due à une modification de pression locale,

le procédé étant mis en œuvre par le processeur implémentant la boucle baro-inertielle et étant **caractérisé en ce qu'**il comprend au moins une étape de limitation de correction de la vitesse verticale baro-inertielle lorsque la valeur absolue de la différence entre l'altitude barométrique et la position verticale baro-inertielle est supérieure à un seuil prédéterminé, l'étape de limitation de correction de la vitesse verticale baro-inertielle comprenant la modification du gain de correction de position.

2. Procédé selon la revendication précédente selon lequel la modification du gain de correction de position comprend la multiplication du gain de correction de position par un facteur prédéterminé supérieur à 1.

3. Procédé selon la revendication précédente selon lequel le seuil prédéterminé est compris entre 3 et 9 mètres, préférentiellement 7 mètres, et le facteur prédéterminé est compris entre 2 et 4, préférentiellement 3.

4. Procédé selon l'une quelconque des revendications précédentes selon lequel le seuil prédéterminé est fonction de l'altitude baro-inertielle.

5. Procédé selon l'une quelconque des revendications précédentes selon lequel la modification de gain de correction de position n'est réalisée que si l'altitude baro-inertielle est inférieure ou égale à un seuil d'altitude prédéterminé.

6. Procédé selon l'une quelconque des revendications précédentes selon lequel l'étape de limitation de correction de la vitesse verticale baro-inertielle comprend en outre la modification du gain de correction de vitesse et la modification du gain de correction d'accélération.

7. Procédé selon la revendication précédente selon lequel la modification du gain de correction de vitesse comprend la multiplication du gain de correction de vitesse par un premier facteur prédéterminé inférieur à 1 et la modification du gain de correction d'accélération comprend la multiplication du gain de correction d'accélération par un deuxième facteur prédéterminé inférieur à 1.

8. Système aéroporté comprenant au moins :

   - un baro-altimètre,
   - un accéléromètre et
   - un processeur implémentant une boucle baro-inertielle, la boucle baro-inertielle prenant en entrée au moins une accélération verticale provenant d'au moins une mesure de l'accéléromètre et au moins une altitude barométrique provenant d'au moins une mesure du baro-altimètre, la boucle baro-inertielle étant configurée pour :

   ◦ fournir, à partir de l'accélération verticale, au moins une altitude et au moins une vitesse verticale
   ◦ corriger, à partir et de l'altitude barométrique et d'au moins un gain de correction de position, d'au moins un gain de correction de vitesse verticale et d'au moins un gain de correction d'accélération verticale, l'altitude et la vitesse verticale,

   la vitesse verticale baro-inertielle subissant une modification due à une modification de l'altitude barométrique, la modification de l'altitude barométrique étant due à une modification de pression locale,
   le système étant **caractérisé en ce que** le processeur est configuré pour mettre en œuvre le procédé de limitation de correction de vitesse verticale baro-inertielle selon l'une quelconque des revendications précédentes.

9. Aéronef **caractérisé en ce qu'**il comprend le système aéroporté selon la revendication 8.

10. Produit programme d'ordinateur comprenant des instructions qui, lorsque le programme est exécuté par le processeur du système selon la revendication 8, conduisent celui-ci à mettre en œuvre le procédé selon l'une quelconque des revendications 1 à 7.

11. Support d'enregistrement lisible par ordinateur comprenant des instructions qui, lorsqu'elles sont exécutées par le processeur du système selon la revendication 8, conduisent celui-ci à mettre en œuvre le procédé selon l'une quelconque des revendications 1 à 7.

**Patentansprüche**

1. Verfahren zur Begrenzung der Korrektur der baro-inertialen Vertikalgeschwindigkeit, wobei die baro-inertiale Vertikalgeschwindigkeit durch eine baro-inertiale Schleife berechnet wird, die durch mindestens einen in einem luftgestützten System enthaltenen Prozessor implementiert wird, wobei das luftgestützte System außerdem mindestens einen Beschleunigungsmesser und mindestens einen barometrischen Höhenmesser umfasst, wobei die baro-inertiale Schleife mindestens eine vertikale Beschleunigung aus mindestens einer Messung des Beschleunigungsmessers und mindestens eine barometrische Höhe aus mindestens einer Messung des barometrischen Höhenmessers als Eingabe verwendet, wobei die baro-inertiale Schleife so konfiguriert ist, dass sie:

- aus der vertikalen Beschleunigung mindestens eine baro-inertiale vertikale Position und die baro-inertiale vertikale Geschwindigkeit liefert
- sowohl anhand der barometrischen Höhe als auch anhand mindestens einer Positionskorrekturverstärkung mindestens einer vertikalen Geschwindigkeitskorrekturverstärkung und mindestens einer vertikalen Beschleunigungskorrekturverstärkung die baro-inertiale vertikale Position und die baro-inertiale vertikale Geschwindigkeit korrigiert,

wobei die baro-inertiale Vertikalposition aufgrund einer Änderung der barometrischen Höhe eine Änderung erfährt, die auf eine Änderung des lokalen Drucks zurückzuführen ist,

wobei das Verfahren von dem Prozessor ausgeführt wird, der die baro-inertiale Schleife implementiert, und **dadurch gekennzeichnet ist, dass** es mindestens einen Schritt zur Begrenzung der Korrektur der baro-inertialen Vertikalgeschwindigkeit umfasst, wenn der Absolutwert der Differenz zwischen der barometrischen Höhe und der baro-inertialen Vertikalposition größer als ein vorbestimmter Schwellenwert ist, wobei der Schritt der Begrenzung der Korrektur der baro-inertialen Vertikalgeschwindigkeit die Änderung der Positionskorrekturverstärkung umfasst.

2. Verfahren nach dem vorhergehenden Anspruch, bei dem die Änderung der Positionskorrekturverstärkung die Multiplikation der Positionskorrekturverstärkung mit einem vorbestimmten Faktor größer als 1 umfasst.

3. Verfahren nach dem vorhergehenden Anspruch, bei dem der vorbestimmte Schwellenwert zwischen 3 und 9 Metern, vorzugsweise 7 Metern, liegt und der vorbestimmte Faktor zwischen 2 und 4, vorzugsweise 3, liegt.

4. Verfahren nach einem der vorhergehenden Ansprüche, bei dem der vorbestimmte Schwellenwert von der baro-inertialen Höhe abhängt.

5. Verfahren nach einem der vorhergehenden Ansprüche, bei dem die Änderung der Positionskorrekturverstärkung nur durchgeführt wird, wenn die baro-inertiale Höhe kleiner oder gleich einem vorbestimmten Höhenschwellenwert ist.

6. Verfahren nach einem der vorhergehenden Ansprüche, bei dem der Schritt der Begrenzung der Korrektur der baro-inertialen Vertikalgeschwindigkeit außerdem die Änderung der Geschwindigkeitskorrekturverstärkung und die Änderung der Beschleunigungskorrekturverstärkung umfasst.

7. Verfahren nach dem vorhergehenden Anspruch, bei dem die Änderung der Geschwindigkeitskorrekturverstärkung das Multiplizieren der Geschwindigkeitskorrekturverstärkung mit einem ersten vorbestimmten Faktor kleiner als 1 umfasst und die Änderung der Beschleunigungskorrekturverstärkung das Multiplizieren der Beschleunigungskorrekturverstärkung mit einem zweiten vorbestimmten Faktor kleiner als 1 umfasst.

8. Luftgestütztes System, das mindestens umfasst:

- einen barometrischen Höhenmesser,
- einen Beschleunigungsmesser und
- einen Prozessor, der eine baro-inertiale Schleife implementiert, wobei die baro-inertiale Schleife mindestens eine vertikale Beschleunigung aus mindestens einer Messung des Beschleunigungsmessers und mindestens eine barometrische Höhe aus mindestens einer Messung des barometrischen Höhenmessers als Eingabe erhält, wobei die baro-inertiale Schleife so konfiguriert ist, dass sie:

∘ aus der vertikalen Beschleunigung mindestens eine Höhe und mindestens eine vertikale Geschwindigkeit liefert
∘ sowohl anhand der barometrischen Höhe als auch anhand mindestens einer Positionskorrekturverstärkung mindestens einer vertikalen Geschwindigkeitskorrekturverstärkung und mindestens einer vertikalen Beschleunigungskorrekturverstärkung die Höhe und die vertikale Geschwindigkeit korrigiert,

wobei die baro-inertiale Vertikalgeschwindigkeit aufgrund einer Änderung der barometrischen Höhe einer Änderung unterliegt, die auf eine Änderung des lokalen Drucks zurückzuführen ist,

wobei das System **dadurch gekennzeichnet ist, dass** der Prozessor so konfiguriert ist, dass er das Verfahren zur Begrenzung der baro-inertialen Vertikalgeschwindigkeitskorrektur gemäß einem der vorstehenden Ansprüche durchführt.

9. Luftfahrzeug, **dadurch gekennzeichnet, dass** es das luftgestützte System gemäß Anspruch 8 umfasst.

10. Computerprogrammprodukt, das Befehle umfasst, die, wenn das Programm vom Prozessor des Systems gemäß Anspruch 8 ausgeführt wird, diesen dazu veranlassen, das Verfahren gemäß einem der Ansprüche 1 bis 7 durchzuführen.

11. Computerlesbares Aufzeichnungsmedium mit Befehlen, die, wenn sie vom Prozessor des Systems gemäß Anspruch 8 ausgeführt werden, diesen veranlassen, das Verfahren gemäß einem der Ansprüche 1 bis 7 auszuführen.

**Claims**

1. A method for limiting baro-inertial vertical speed correction, the baro-inertial vertical speed being calculated by a baro-inertial loop, the baro-inertial loop being implemented by at least one processor included in an airborne system, the airborne system further comprising at least one accelerometer and at least one baro-altimeter, the baro-inertial loop taking as an input at least one vertical acceleration from at least one measurement of the accelerometer and at least one barometric altitude from at least one measurement of the baro-altimeter, the baro-inertial loop being configured to:

   - provide, from the vertical acceleration, at least one baro-inertial vertical position and the baro-inertial vertical speed
   - correct the baro-inertial vertical position and the baro-inertial vertical speed from the barometric altitude and at least one position correction gain, at least one vertical speed correction gain and at least one vertical acceleration correction gain,
   the baro-inertial vertical position undergoing a modification due to a modification in the barometric altitude, the modification in the barometric altitude being due to a modification in local pressure,
   the method being implemented by the processor implementing the baro-inertial loop and being **characterised in that** it comprises at least one step of limiting correction of the baro-inertial vertical speed when the absolute value of the difference between the barometric altitude and the baro-inertial vertical position is greater than a predetermined threshold, the step of limiting correction of the baro-inertial vertical speed comprising modifying the position correction gain.

2. The method according to the preceding claim, wherein modifying the position correction gain comprises multiplying the position correction gain by a predetermined factor greater than 1.

3. The method according to the preceding claim, wherein the predetermined threshold is between 3 and 9 metres, preferably 7 metres, and the predetermined factor is between 2 and 4, preferably 3.

4. The method according to any of the preceding claims, wherein the predetermined threshold is a function of the baro-inertial altitude.

5. The method according to any of the preceding claims, wherein the position correction gain modification is performed only if the baro-inertial altitude is less than or equal to a predetermined altitude threshold.

6. The method according to any of the preceding claims, wherein the step of limiting baro-inertial vertical speed correction further comprises modifying the speed correction gain and modifying the acceleration correction gain.

7. The method according to the preceding claim, wherein modifying the speed correction gain comprises multiplying the speed correction gain by a first predetermined factor less than 1 and modifying the acceleration correction gain comprises multiplying the acceleration correction gain by a second predetermined factor less than 1.

8. An airborne system comprising at least:

   - a baro-altimeter,
   - an accelerometer and
   - a processor implementing a baro-inertial loop, the baro-inertial loop taking as an input at least one vertical acceleration from at least one measurement of the accelerometer and at least one barometric altitude from at least one measurement of the baro-altimeter, the baro-inertial loop being configured to:

       ∘ provide, from the vertical acceleration, at least one altitude and at least one vertical speed
       ∘ correct the altitude and the vertical speed from the barometric altitude and from at least one position correction gain, from at least one vertical speed correction gain and from at least one vertical acceleration correction gain,

   the baro-inertial vertical speed undergoing a modification due to a modification in the barometric altitude, the modification in the barometric altitude being due to a modification in local pressure,
   the system being **characterised in that** the processor is configured to implement the method for limiting the baro-inertial vertical speed correction according to any of the preceding claims.

9. An aircraft **characterised in that** it comprises the airborne system according to claim 8.

10. A computer program product comprising instructions which, when the program is executed by a computer, cause the same to implement the method according to any of claims 1 to 7.

11. A computer-readable recording medium comprising instructions which, when executed by a computer, cause the same to implement the method according to any of claims 1 to 7.

**Fig. 1**

**Fig. 2A**

**Fig. 2B**

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4882697 A
- US 2003233175 A1
- US 2015006020 A1